# EUROPEAN PATENT SPECIFICATION

(11) **EP 3 191 411 B1**
(45) Date of publication and mention of the grant of the patent: **25.11.2020**
(21) Application number: 15840009.3
(22) Date of filing: 11.09.2015
(51) Int. Cl.: C02F 1/00, G01N 1/10

(54) **MEASUREMENT AND TREATMENT OF FLUID STREAMS**
MESSUNG UND BEHANDLUNG VON FLUIDSTRÖMEN
MESURE ET TRAITEMENT DE FLUX DE FLUIDE

(30) Priority: 11.09.2014 AU 2014903635
(43) Date of publication of application: 19.07.2017
(73) Proprietor: Science Developments Pty Ltd, Belrose, New South Wales 2085 (AU)
(72) Inventor: PEMBROKE, Paul William, Belrose, New South Wales 2085 (AU)
(74) Representative: Nederlandsch Octrooibureau
(86) International application number: PCT/AU2015/000564
(87) International publication number: WO 2016/037227

(56) References cited:
- US-A- 4 855 061
- US-A- 4 999 116
- US-A- 5 202 016
- US-A- 5 645 799

## Description

### TECHNICAL FIELD

A method and system for measuring and treating fluid streams is disclosed. The method and system find particular application with treating aqueous suspensions and dispersions, such as, water and wastewater streams in mining and mineral processing, sewage treatment, power generation, pulp and papermaking, sludge dewatering, food and dairy manufacturing, and industrial liquid waste applications, but are not limited to these applications.

### BACKGROUND ART

Water and wastewater streams in mining and mineral processing, sewage treatment, power generation, pulp and papermaking, sludge dewatering, food and dairy manufacturing, and industrial liquid waste can have particulate matter suspended therein, the amount and contents of which can vary. Such variations can have implications for downstream processing of the wastewater, and may result in downstream processes having to be temporarily shut down, with resultant time and cost consequences.

US 5,846,433 discloses a process for flocculating a sewage sludge to form a thickened sludge/cake and a separated liquor. The process monitors a dewatering parameter of the liquor, which monitoring can be used to pre-treat the sewage sludge prior to dewatering.

US 4,999,116 discloses a process for treating water for the removal of heavy metals wherein all suspended solids are removed.

### SUMMARY OF THE DISCLOSURE

Disclosed herein is a method for indicating that a treatment of particles in a fluid stream is required. The fluid stream may comprise a mixture of particles (i.e. particles of varying size and properties may be present in the fluid stream). The fluid stream may be a liquid stream, and may be an aqueous or non-aqueous stream. The fluid stream may also include product streams and/or waste streams (e.g. wastewater). The fluid stream may include particles whose presence is undesirable insofar as treatment of the fluid stream is concerned. For example, a mining wastewater stream may comprise suspended tailings or solids that require treatment, but may additionally comprise undesirable (e.g. fine particles such as colloidal and sub-colloidal clay) particles. The method as disclosed herein can, in this example, indicate that a treatment of the undesirable particles (i.e. the clay particles) is required, whereby a treatment regime (i.e. existing wastewater treatment) for the suspended tailings or solids need not be affected or interfered with. In another example, the fluid stream may be the product line in a pulp or papermaking process (e.g. pulp slurry). In such an example, it may be preferred to increase the retention of fine and ultrafine particles (e.g. wood fiber, clay, fillers, etc.) in the pulp slurry to increase paper yield. The method as disclosed herein can, in this example, indicate that an adjustment in the treatment of the particles (e.g. the wood fiber particles) is required (e.g. adjustment of coagulant dosing, such as alum, is required to maintain optimal retention of paper fines).

The method may be deployed in the treatment of fluid streams, including aqueous suspensions and dispersions such as are produced in mining and mineral processing, sewage treatment, power generation, pulp and papermaking, sludge dewatering, food and dairy manufacturing, and industrial liquid waste applications, but is not limited to these applications.

The method comprises obtaining a sample of the fluid stream. The sample may be obtained at one, or at various stages or locations of a fluid treatment regime (e.g. from a feed or tailings pipe, treatment (e.g. settling or thickening) vessel, filtration stage, holding vessel or settling pond, etc.).

The sample may be obtained continuously, for example, as a continuous side stream offtake or a continuous bleed stream offtake of the fluid stream at one of the various stages or locations of the fluid treatment regime.

The method also comprises processing the sample to remove large particles therefrom, so as to obtain an aliquot that contains particles of a certain size (e.g. the undesirable fine particles such as colloidal and sub-colloidal clay in a mining wastewater stream, or desirable fine particles such as colloidal and sub-colloidal wood fibers in a papermaking pulp slurry) when they are present in the fluid stream. Processing of the sample may include filtering, centrifuging, hydrocycloning or another process to remove large particles therefrom. For example, the sample may be filtered using e.g. a cross-flow filter, which is self-cleaning, to obtain the aliquot (in the form of a filtrate). The sample may alternatively or additionally be filtered through a microporous membrane under vacuum with periodic backflush cleaning. In another example, the sample may be spun in a hydrocyclone or a centrifuge to obtain the aliquot (in the form of a centrate) containing the desired particle distribution. Other self-cleaning apparatus may be employed. Such apparatus can help to maintain continuity of the method in use. The filtering or centrifuging can be employed to remove from the sample particles which can otherwise interfere with a measuring step (e.g. to remove larger particles that are suspended in a wastewater stream, such as the mineral tailings, mineral residues, sewage sludge, etc.).

In some forms, obtaining and processing the sample to obtain the aliquot may occur concurrently. In other forms, obtaining the sample and processing of the sample to obtain the aliquot may occur separately.

Also, depending on the fluid stream, the particles may comprise other colloidal/sub-colloidal particles, or other fine (e.g. insoluble) particles that are suspended or (e.g. microscopically) dispersed in the stream, and whose presence can interfere with the treatment regime for the particular fluid stream.

The method further comprises measuring in the aliquot a parameter that relates to quantity and/or charge of the particles. A continuous flow of the aliquot may be measured.

In accordance with the method as disclosed herein, when the parameter deviates from a desired value, this can indicate that the (e.g. undesirable) particles in the fluid stream require treatment. In other words, it has been discovered that a sample (e.g. side or bleed stream) aliquot can be used to indicate that a main or major flow of fluid requires treatment. Further, such an indication may be preemptive, as may be the treatment, in that, as soon as a deviation is detected, corrective action can be implemented (e.g. immediately and automatically) to treat the main/major flow of fluid.

The method can further comprise treating the particles in the fluid stream until the measured parameter in the aliquot returns to the desired value. In this regard, the aliquot is obtained from a sample of the treated fluid stream (i.e. the subsequently measured sample and aliquot is obtained downstream of where treatment of the fluid stream has taken place). Alternatively, and as outlined above, the sample (and hence aliquot) may be obtained continuously and will thus be representative of the treated fluid stream, when the fluid stream is treated at a location upstream of where the sample and aliquot is obtained.

In some forms, disclosed is a method for indicating treatment of particles when particles of varying size are present in a fluid stream, the method comprising, preparing an aliquot from the fluid stream, the aliquot containing only particles within a certain size range, measuring in the aliquot one or more parameters that relate to quantity and/or charge of the particles, the one or more parameters including turbidity; And using measurements of the one or more parameters to determine whether the particles in the fluid stream require treatment. In some forms a plurality of parameters are measured.

It should be understood that the measured value of the parameter will depend on the type of measurement and type of meter employed. For example, each of a streaming current detector (meter), colourimeter, conductivity meter, turbidity meter, etc. will measure a different parameter/value. Thus, the desired value will vary with the type of measurement and type of meter.

Further, the term "desired" in relation to the value is intended to indicate that the value as measured is suitable to the particular treatment regime for the fluid (e.g. that an indicated level of the particle will not interfere with the treatment regime for the fluid). It should be further understood that this value will also vary with the fluid application (e.g. tailings, mineral processing, sewage, food and dairy manufacturing, etc.), as well as with the site, as well as with the type of solid materials suspended in the fluid.

In one embodiment the desired value may be a set (value) point, or it may comprise a set range of values. As above, the set point or set range can be determined with reference to the fluid stream so as to be suitable for its particular treatment regime. The set point or set range may be programmed into a controller.

Further, in one embodiment, a parameter may be selected that is known to deviate from the desired value when particle(s) are present in the fluid stream at a level that renders the stream unsuitable for the treatment regime.

In one embodiment, usually the treatment regime comprises treating other particulate matter in the fluid stream (e.g. to capture mineral tailings, mineral residues, sewage sludge, etc. and separate it from the water). In the method disclosed herein, this other particulate matter is typically removed (e.g. filtered, centrifuged or separated as a fraction in a hydrocyclone) from the sample before measurement.

It has been discovered that the (e.g. undesirable) particles that are measured in the sample aliquot can correspond to those that are present in the fluid stream, whereby the parameter measured in the aliquot (including any deviations from a desired value) can be representative or indicative of the particles (and deviations) in the fluid stream. This stands in contradistinction to US 5,846,433, where the entire liquor separated from the sewage filter cake is measured. In other words, in the method as disclosed herein, a side or bleed stream of the fluid stream may be sampled, processed (such as by filtering or centrifuging) to obtain an aliquot containing particles of a certain size, and this aliquot used to measure and detect deviations in the parameter (and hence measure changes in the quantity and/or charge of particles present in the fluid stream).

So, for example, as soon as such deviations are detected, an appropriate (e.g. corrective) treatment of the fluid stream can be implemented. This may take the form of selecting and dispensing a suitable chemical (e.g. a coagulant, flocculant, clarifying or precipitation agent, acid, base, salt, etc.) into the fluid stream. As mentioned above, this dispensing can be preemptive, and can ensure that the treatment regime for the fluid stream is not shut down or taken "offline". The dispensing may also be proportional (e.g. it may be controlled) to the level of desirable or undesirable particles in the fluid stream.

For example, the amount of chemical dispensed can be sufficient to coagulate, flocculate or agglomerate undesirable particles such that they then do not interfere with the fluid stream treatment regime, and rather may be removed as part of the normal fluid stream treatment regime. Similarly, the amount of chemical dispensed can be sufficient to coagulate, flocculate or agglomerate desirable particles such that their capture and retention is optimized for subsequent treatment regimes.

In one embodiment the chemical may be automatically dispensed into the fluid stream. For example, the automatic dispensing can form part of a controlled feedback loop, in which a parameter value deviation is measured, a signal is sent to an automatic dispenser, which continues to dispense until the measured value returns to a set point or within a set range.

When the particles in the aliquot comprise colloidal and/or sub-colloidal e.g. clay particles, the suitable chemical may comprise a suitable coagulant. The coagulant can cause the colloidal and/or sub-colloidal clay particles to coagulate, to then enable them to be separated from the fluid stream as part of the treatment regime (whether that treatment regime be to collect the coagulated particles or the fluid separated therefrom).

In another embodiment, the suitable chemical may comprise a flocculant, clarifying agent or precipitation agent that causes the particles to flocculate, settle out, agglomerate, precipitate and/or become filterable or separable.

In one embodiment, the parameter of the particles which relates to the charge of the particles may be the net surface charge of the particles. The net surface charge of the particles may be determined by measuring charge demand using a streaming current detector or colourimeter. When measuring using the streaming current detector, a coagulant can be dosed into the aliquot. When measuring using a colourimeter, an indicator dye can be dosed into the aliquot.

Alternatively, or additionally, the parameter relating to charge may be the conductivity of the particles, which may be measured using a conductivity meter.

In one embodiment, the parameter of the particles that relates to the quantity of the particles may be the turbidity of the aliquot. The turbidity of the aliquot may be measured using a turbidity meter. Thus, a deviation in the turbidity reading of the aliquot (e.g. from a set point, or outside of a set range) can indicate that corrective action (e.g. dispensing of a corrective chemical into the fluid stream) is required.

In accordance with the invention the sample is processed such that the aliquot contains a maximum particle size of less than 20 micrometres, typically less than 10 micrometres, and more typically less than 5 micrometres

In one embodiment, the method may further comprise continuously recording and outputting characteristics of the fluid stream that relate to the measured parameter. For example, these characteristics may be uploaded to a server for remote viewing and monitoring (e.g. via the internet, or a proprietary intranet, etc.).

Also disclosed herein is a method for treating a fluid stream that comprises particles of varying size suspended therein. As above, there may be a mixture of particles including particles whose presence is undesirable insofar as treatment of the fluid stream is concerned.

The method comprises obtaining a sample of the fluid stream.

The method further comprises processing the sample to remove large particles therefrom so as to obtain an aliquot that contains particles of a certain size.

The method also comprises measuring in the aliquot a parameter that relates to quantity and/or charge of the particles in the aliquot. When the parameter deviates from a desired value, this indicates that corresponding particles in the fluid stream require treatment.

The method additionally comprises selecting a chemical that is suitable for treating the corresponding particles.

The method further comprises adding the chemical to the fluid stream.

In one embodiment, the chemical may be added to the fluid stream at a location upstream of where the sample is obtained.

The method for treating may be otherwise as set forth above for the method for indicating treatment.

Also disclosed herein is a system for enabling treatment of a fluid stream that comprises particles of varying size suspended therein.

The system comprises an apparatus for obtaining a sample of the fluid stream. The system also comprises an apparatus for processing the sample to remove large particles therefrom, so as to obtain an aliquot that contains particles of a certain size. The system further comprises a meter for measuring in the aliquot a parameter that relates to quantity and/or charge of the particles in the aliquot. The meter is further able to measure when the parameter deviates from a desired value to indicate that corresponding particles in the fluid stream require treatment.

Components of the system may be otherwise as set forth above.

### BRIEF DESCRIPTION OF THE DRAWINGS

Notwithstanding any other forms which may within the method and system as set forth in the Summary, specific embodiments of the method and system will now be described, by way of example only, with reference to the accompany drawings in which:
Figure 1 shows a schematic flow sheet for a method and system for measuring a surface charge of particles using a streaming current detector or colourimeter, and for dosing a wastewater stream; and
Figure 2 shows a schematic flow sheet for a method and system for measuring a quantity of particles using a turbidity meter, and for dosing a wastewater stream.

### DETAILED DESCRIPTION OF SPECIFIC EMBODIMENTS

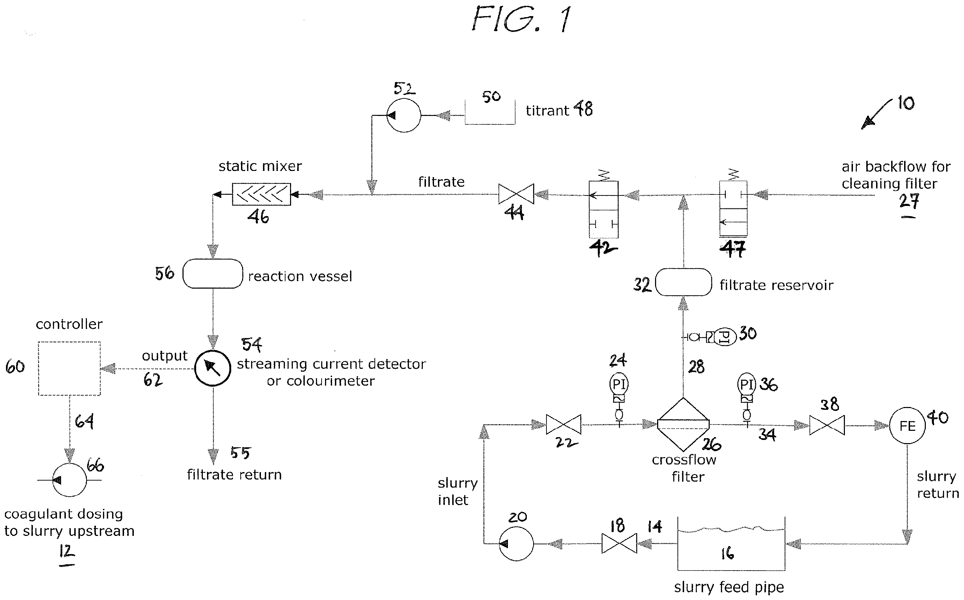

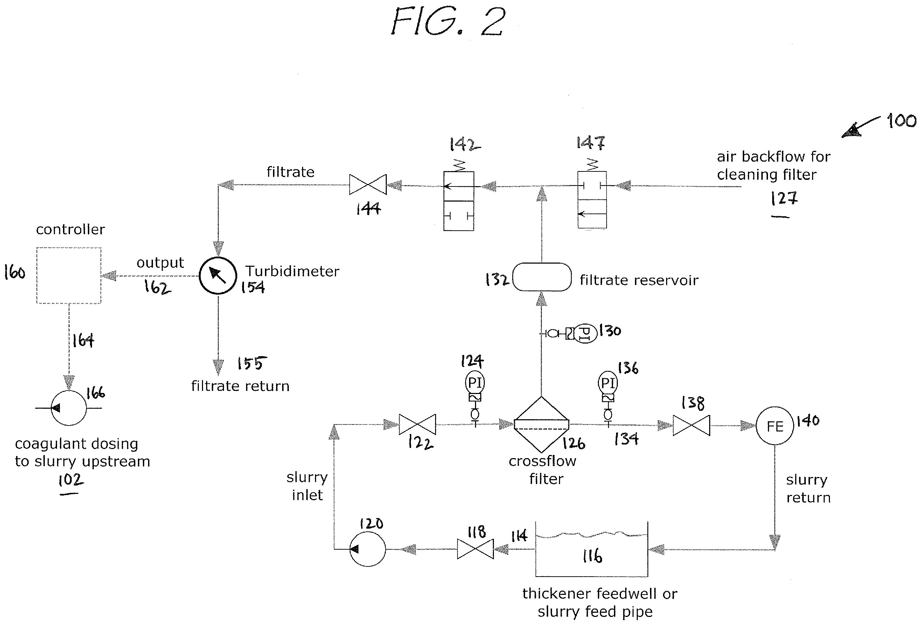

Figure 1 shows a schematic flow sheet for a method and a system 10 for measuring a surface charge of particles using a streaming current detector or colourimeter. Figure 1 also schematically indicates an upstream coagulant dosing 12 of a wastewater stream. Figure 2 shows a schematic flow sheet for a method and a system 100 for measuring a quantity of particles using a turbidity meter. Figure 2 also schematically indicates an upstream coagulant dosing 102 of a wastewater stream.

Referring firstly to Figure 1, the system 10 is used to measure and treat a wastewater stream comprising suspended solids. The suspended solids include colloidal and/or sub-colloidal particles entrained therein. Such wastewaters are typical in the mining, minerals processing and sewage treatment industries.

The system 10 is configured to continuously obtain a sample from the wastewater stream and to filter the sample continuously, as well as to continuously measure and treat the wastewater, as described hereafter.

The system 10 comprises an apparatus for obtaining a sample stream of the wastewater stream in the form of an offtake pipe 14, which receives a side or bleed stream from a slurry feed pipe (or thickener feedwell) 16. The slurry feed pipe or thickener feedwell form part of a standard treatment regime for the wastewater. The sample offtake is caused by a pump 20 to pass through a pressure control valve 18, a further control valve 22, and via a PI controller 24 to a filter.

The filter takes the form of a crossflow filter 26 which is arranged to continuously filter the sample to obtain a filtrate. Such a crossflow filter is self-cleaning, but can be periodically cleaned by an air backflow system 27.

The filtrate passes laterally from the crossflow filter 26 into a filtrate pipe 28, and then via a PI controller 30 to a filtrate reservoir 32. The filtrate comprises a fraction of the suspended particles that formed a part of the suspended solids in the wastewater stream.

The remaining filter residue passes through the crossflow filter 26 as slurry 34, via a further PI controller 36 and pressure control valve 38 and into a flow meter (flow element) 40. From here, the slurry is returned to the slurry feed pipe (or thickener feedwell) 16.

The crossflow filter 26 can comprise a porous, sintered metal tubular filter that filters the sample stream such that the filtrate contains particles with a maximum size in the range of about 1 to 5 micrometres. Such a particle size range can ensure that colloidal and/or sub-colloidal particles pass into the filtrate, whereas other larger particles (e.g. minerals residues, sludge, etc.) in the sample stream pass through the filter as slurry 34, and are returned to the slurry feed pipe (or thickener feedwell) 16. Depending on the nature of the particles, other self-cleaning apparatus for filtration or centrifugation may be employed such as vacuum or brushed screen filters, hydrocyclones, etc.

The filtrate from the filtrate reservoir 32 is fed via a normally open valve 42 and further pressure control valve 44 to a static mixer 46. An opposing normally closed valve 47 forms part of the air backflow system 27 (i.e. when air from 27 is used to flush clean the filter, the valve 42 can be closed and the valve 47 opened). Instead of or additional to the air backflow system 27, ultrasonic cleaning can be employed.

A titrant 48 from a titrant holding tank 50 is caused by a pump 52 to be dosed into the filtrate before it passes into the static mixer 46. When measuring the filtrate using a streaming current detector 54, a titrant in the form of a dilute coagulant is dosed into the filtrate to enable charge neutralisation of the colloidal and/or sub-colloidal particles, resulting in a detectable change in streaming current value. When measuring the filtrate using a colourimeter 54, a titrant in the form of an indicator/coagulant dye is dosed into the filtrate, which agglomerates with the colloidal and/or sub-colloidal particles, resulting in a change of colour. In either case, the titrant and filtrate are mixed together in the static mixer 46, and allowed to react in a reaction vessel 56, before being passed to the streaming current detector or colourimeter 54.

Each of the streaming current detector or colourimeter 54 measures in the filtrate a parameter that relates to charge of the particles in the filtrate. More specifically, the parameter of the particles which is measured is the net surface charge of the particles. Further, the net surface charge of the particles is determined by measuring the cationic charge demand using the streaming current detector or colourimeter 54. The measured filtrate is returned as stream 55 to the slurry feed pipe (or thickener feedwell) 16.

A controller 60 is arranged to receive the signal 62 output by the detector or meter 54. The controller 60 is programmed to detect when the measured parameter deviates from a particular, desired value. This deviation indicates that corresponding particles in the wastewater stream require some form of treatment, as described hereafter.

The controller 60 is in turn arranged to output a signal 64 to dispensing mechanism in the form of a coagulant dosing pump 66 that doses a suitable coagulant into the wastewater stream, upstream from the sample offtake pipe 14, as described hereafter. A coagulant dosing mechanism is used when the particles that have passed into the filtrate are in excess of the set point or set range.

The controller 60 can take the form of a programmable processor (e.g. microprocessor) that can be pre-programmed to memorise a particular, desired value of the measured parameter. For example, in the case where the meter is a streaming current detector, the measured parameter may be a set range of current or voltage values, or e.g. a set point of around 0. Deviations from this range or point are measured, detected, and then a signal 64 is sent to the coagulant dosing pump 66 to dose a coagulant into the wastewater stream. This dosing enables the colloidal/sub-colloidal particles to be removed (e.g. filtered/settled) and continues until the measured parameter in the filtrate returns to the set range or set point.

In the case where the meter is a colourimeter, the measured parameter may be a set range (spectrum) of wave length absorption.

For some wastewaters, the meter 54 may take the form of a conductivity meter, for example, where the filtrate has a low salt level, and therefore conductivity can be indicative of particle (e.g. colloidal/sub-colloidal) surface charge.

The controller (processor) 60 can also be configured to continuously record and output characteristics of the wastewater stream that relate to the particular parameter being measured. These characteristics can be uploaded to a server for remote viewing and monitoring via the internet, or a proprietary intranet, etc.

Referring now to Figure 2, the system 100 is again used to measure and treat a wastewater stream comprising suspended solids including colloidal and/or sub-colloidal particles entrained therein. In Figure 2, like reference numbers to Figure 1 are employed for like parts, but with 100 added thereto. Where the system comprises components that are generally the same as in Figure 1 they will not be re-described, for the sake of brevity.

The system 100 is again configured to continuously obtain a sample from the wastewater stream and to filter the sample continuously, as well as to continuously measure and treat the wastewater.

In system 100, however, the parameter to be measured relates to quantity. Hence, the meter takes the form of a turbidimeter 154 for measuring turbidity of the filtrate stream 155. Because particle charge is no longer being measured, the titrant 48 and associated titrant dosing, mixing and reacting can be eliminated. Hence, the system 100 is simpler than the system 10.

In the case of a turbidity meter, the measured parameter may be a set range of NTU values (e.g. 0-5 NTU) or a set point (e.g. ∼ 2 NTU), indicating that a sufficiently low amount of colloidal/sub-colloidal particles are present in the wastewater. When the turbidity meter measures above this range or set point, the controller 160 detects when this deviation from the desired value occurs. The controller 160 then outputs a signal 164 to the coagulant dosing pump 166, which in turn doses a suitable coagulant into the wastewater stream, upstream from the sample offtake pipe 14.

Whilst Figures 1 and 2 refer to schematic flow sheets for the treatment of wastewater streams, it should be appreciated that the method and system disclosed therein could be deployed in the treatment of other fluid streams, such as where the fluid stream is a product stream (as opposed to a waste stream). In this regard, the method and system exemplified in Figures 1 and 2 could be deployed in the treatment of various fluid streams, including aqueous suspensions and dispersions such as are produced in mining and mineral processing, sewage treatment, power generation, pulp and papermaking, sludge dewatering, food and dairy manufacturing, and industrial liquid waste applications, but it will be appreciated that the method and system exemplified in the Figures is not so limited. It will also be appreciated that the method and system depicted in the schematic flow sheets of Figures 1 and 2 may need to be modified, depending on the intended application (e.g. product vs. waste stream).

### Examples

Non-limiting Examples will now be described. Example 1 describes the context of the method and system, and Examples 2 and 3 provide specific experimental applications.

### Example 1

Specific applications of the method and system were investigated in the area of solid/liquid separation processes that relied on chemical coagulation and flocculation. A specific field of investigation was gravitational thickeners in coal washeries as well as gravitational thickeners in other types of mines. Other fields included sewage treatment in relation to both gravitational clarifiers and biomass (sludge) dewatering, mine tailings dewatering, and applications that required optimised flocculation of slurries where variation in suspended particle surface charge occurred.

It was noted that, in the course of mining and washing coal, a significant quantity of wastewater slurry was produced that contained high solids (e.g. >5%), primarily in the form of coal fines and minerals (e.g. clay minerals, silicates, carbonates and sulfur compounds), much of which were colloidal in nature (usually >20%).

This slurry was normally introduced into a gravitational thickener where high molecular weight anionic (negatively charged) flocculant polymer was added to facilitate particle agglomeration and settling. Flocculated solids settled to the bottom of the thickener for subsequent removal, while the clarified water overflowed at the perimeter for subsequent re-use in the coal washery.

It was noted that the flocculation was a complex process that depended on the physical, chemical and electro-kinetic properties of the suspended particles, and especially on the interaction of colloidal particles and ions in solution, as well as the pH of the suspension. The flocculation involved a variety of mechanisms such as charge neutralisation, polymer bridging and hydrogen bonding.

It was further noted that, for most coal mining operations, the application of low to medium charge density anionic polyacrylamide flocculant to the coal slurry as it entered the thickener usually gave good floc formation. This in turn resulted in fast settling solids and sufficiently clarified overflow water for return to the washery for re-use.

However, as the coal extraction/digging moved from one location to another within the mine site, variations in the types and concentrations of suspended particles were experienced, along with variations in slurry pH. This typically caused the simple flocculation to become less effective or sometimes completely ineffective, whereby good separation of solid/liquid was not achieved, resulting in turbid water overflowing from the thickener. Eventually, when this turbidity exceeded an acceptable limit for use in washing coal, the plant was shut-down and production ceased, with financial implications.

Whilst the deterioration in thickener performance when using anionic flocculant could be overcome by the addition of a low molecular weight cationic coagulant prior to flocculant addition, it was extremely difficult to determine and maintain an optimal coagulant dose, due to the continually changing nature of the slurry feed to the thickener.

Furthermore, it was noted that instrumentation for the automatic control of flocculation in thickeners was ineffective in distinguishing deterioration in flocculation performance due to a change in particle surface charge. For example, as the anionicity of the influent slurry particles increased (e.g. more colloidal clay was present), it was noted that the flocs became smaller and did not agglomerate well. This resulted in an increase in settling time and worsening discharge turbidity. The existing devices then responded to the slower settling rate by increasing polymer dose rate, which made the situation worse due to the anionic nature of the flocculant polymer.

In addition, it was noted that measuring the turbidity of water discharged from the thickener, and using this value to control coagulant dosing, had an inherent time delay in sensing a deterioration in flocculation performance, as retention time in the thickener could be hours. Further, response time was too slow, and coagulant dosing was not in accord with changing slurry characteristics during the lag time.

The method and system disclosed herein addressed and solved these problems by continuously generating a measurement that reflected the net surface charge present in the feed slurry to the thickener, or the particle quantity, and used that value to automatically control coagulant addition to maintain optimal flocculation.

The method and system disclosed herein:
- continuously monitored particle surface charge of a filtrate or centrate using streaming current or colourimeter technology to automatically control and optimise flocculation;
- or used a turbidity meter to measure a figure indicative of particle quantity in the filtrate or centrate;
- utilised self-cleaning filtration or centrifugation technology (e.g. a sintered metal cross-flow microfilter to supply a continuous flow of feed slurry filtrate at e.g. < 2 microns) to the meter, protecting the meter from fouling or abrasion by supplying a relatively clean feed containing only very fine particles and colloids;
- found that a fine particle fraction of a wastewater slurry was representative of the slurry as a whole in terms of net surface charge or particle quantity trends; in other words, the filtrate or centrate was able to be used as a proxy for the whole slurry, making use of the presence of charged colloidal particles in the filtrate or centrate;
- maintained the set point (as measured using the filtrate or centrate stream) by automatic feedback control of coagulant dosing upstream, thereby optimising flocculation conditions in the thickener.

Benefits of the method and system included:
- mine productivity increased due to less shutdowns caused by excessively dirty water returning to the washery from the thickener;
- a more reliable solid/liquid separation performance was achieved in the thickener due to improved flocculation control, even when feed slurry characteristics frequently changed;
- a more consistent sludge was produced, which aided subsequent dewatering processes (e.g. filter press);
- accurate and long-term operation of the meter by supplying to the instrument a relatively clean non-fouling filtrate or centrate that still contained ions in solution and colloidal particles;
- a filter or centrifuge device that continuously and automatically self-cleaned, which made its use practical for mining and industrial settings;
- rapid detection of changes in particle surface charge or quantity due e.g. to an increase in anionic clay colloids;
- automatic control of coagulant dosing in real time to maintain optimal flocculation conditions for the wastewater slurry;
- data capture regarding measured values and coagulant dosing, which was able to be used to better understand influent slurry characteristics and thickener performance, and also enabled the correlation of slurry characteristics (e.g. high clay content) with specific locations.

It should also be appreciated that benefits in addition to, or distinct from, those identified above may be apparent, depending on the intended application of the method and system disclosed herein.

### EXAMPLE 2

This experimental example was conducted to demonstrate the use of a streaming current detector (SCD) to measure surface charge on colloidal and sub-colloidal particles suspended in a coal slurry microfiltrate. It was used to further demonstrate how this measurement can be used to control coagulant dosing to maintain optimal flocculation and clarification in a thickener.

Two samples of coal slurry thickener feed were obtained from a New South Wales coal preparation plant. The first slurry sample, designated Sample A, was able to be readily flocculated when dosed with anionic polyacrylamide only (i.e. no coagulant added), and good clarification was achieved (settled turbidity = 17.3 NTU). The anionic polyacrylamide applied was the same as that used in the plant and was characterised by the manufacturer as having a charge density of 5% and a molecular weight of approximately 12 million Dalton. This flocculant was dosed at a concentration of 0.25% and a rate of 3.0 ml/L.

The second slurry sample, designated Sample B, was also able to be flocculated when dosed with anionic polyacrylamide only (applied as above), although smaller flocs were formed, and these flocs settled more slowly than Sample A above. In this case good clarification could not be achieved (settled turbidity = 293 NTU).

In laboratory trials, 250 ml of each of the above ***untreated*** slurry samples were filtered on a Buchner funnel using <2 micron filter paper. A 200ml sample of each microfiltrate thus obtained was measured for streaming current using a ChemTrac Coagulant Charge Analyzer Model CCA3100. The initial streaming current value was recorded, and then the microfiltrate was gradually titrated with a dilute cationic coagulant solution (0.1% OptiFlox® Coagulant 325 polyDADMAC-polysaccharide copolymer) to determine the charge demand of the microfiltrate. The results are set out in Table 1 below:

**Table 1**

| **Sample A** | | **Sample B** | |
|---|---|---|---|
| **Titrant Dose** | **SCD Value** | **Titrant Dose** | **SCD Value** |
| None | -0.06 | None | -0.10 |
| 0.04 ml | +0.04 | 0.04 ml | -0.08 |
| 0.06 ml | +0.07 | 0.06 ml | -0.07 |
| 0.08 ml | +0.11 | 0.08 ml | -0.05 |
| | | 0.12 ml | -0.03 |
| | | 0.16 ml | -0.01 |

The measured SCD value for Sample A rapidly increased in cationicity as the titrant was added, whereas the SCD value for Sample B was slow to increase. This data indicated that a higher cationic charge demand existed for Sample B, which in turn indicated a higher total anionic surface charge present on the fine particles suspended in Sample B.

When a coal tailings slurry was dosed with cationic coagulant, some of the discrete anionic particles (e.g. clay colloids) that were present in the slurry agglomerated with each other or with larger solid particles. When the slurry was then subjected to microfiltration, some of these aggregates were retained in the slurry. This caused a net reduction in both the quantity of particles present in the filtrate and their total anionic surface charge, which in turn lowered the remaining cationic charge demand of the slurry.

Therefore, by pre-determining an ideal set point for cationic charge demand that resulted in optimal flocculation and clarification downstream, it was possible to use the above method to control coagulant dosing upstream to maintain optimal charge conditions.

In order to demonstrate this example of the method and system, 250 ml of Sample B was first dosed with a quantity of coagulant (0.08 ml of 10% OptiFlox® Coagulant 325 polyDADMAC-polysaccharide copolymer) that was previously determined to enable optimal flocculation and clarification. This slurry was then filtered on a Buchner funnel using <2 micron filter paper as before.

A 200ml sample of the microfiltrate thus obtained was measured for streaming current using a ChemTrac Coagulant Charge Analyzer Model CCA3100. The initial streaming current value was recorded, and then the microfiltrate was gradually titrated with a dilute cationic coagulant solution (0.1% OptiFlox® Coagulant 325 polyDADMAC-polysaccharide copolymer) to determine the charge demand of the microfiltrate. The results are set out in Table 2 below:

**Table 2**

| **Treated Sample B (Pre-Dosed with Coagulant)** | |
|---|---|
| **Titrant Dose** | **SCD Value** |
| None | -0.09 |
| 0.04 ml | -0.01 |
| 0.06 ml | +0.02 |
| 0.08 ml | +0.04 |

The measured SCD value for Treated Sample B (pre-dosed with coagulant) now showed a faster increase in cationicity as the titrant was added than the original untreated Sample B. This indicates a reduced cationic charge demand and lower total anionic surface charge remaining in the microfiltrate, which also corresponds with improved flocculation and clarification of the slurry as a whole.

To apply the above method for the control of flocculation in an actual coal preparation plant thickener, required the following steps:
1. Install a continuous sampling, filtration and measuring device as set out in Figure 1.
   In this case, sampling should occur pre-flocculation (i.e. from the thickener feed pipe).
2. Determine a fixed rate dose of titrant that produces SCD values in the desired range.
3. Monitor filtrate SCD readings (charge demand) relative to thickener performance in terms of flocculation and clarification efficacy.
4. Determine a filtrate SCD value or range that prevails when the thickener is performing as desired.
5. Program the controller to maintain the desired SCD set point or range via output signals to the coagulant dosing pump. In other words, if the filtrate charge demand SCD exceeded the set point or range, then coagulant would be dosed upstream to effect a reduction in filtrate charge demand (as per the above experimental example) until the desired SCD value is regained.

Therefore, by introducing a pre-determined fixed rate dose of titrant to a continuous stream of microfiltrate and monitoring the SCD value, it was possible to control and maintain a desired SCD set point via coagulant dosing upstream. Automatically controlling the SCD value at the desired set point enabled surface charge conditions to be maintained in the slurry, which in turn maintained flocculation and clarification performance as desired in the thickener.

### EXAMPLE 3

This experimental example was conducted to demonstrate the use of a turbidimeter (turbidity meter) to measure the quantity of fine particles that remained suspended in a filtrate of a flocculated coal slurry. The example further demonstrated how this measurement was able to be used to control coagulant dosing to maintain optimal flocculation and clarification in a thickener.

Two samples of coal slurry thickener feed were obtained from a New South Wales coal preparation plant. The first slurry sample, designated Sample C, was able to be readily flocculated when dosed with anionic polyacrylamide only (i.e. no coagulant added), and good clarification was achieved (settled turbidity = 21.8 NTU). The anionic polyacrylamide applied was characterised by the manufacturer as having a charge density of 5% and a molecular weight of approximately 12 million Dalton. This flocculant was dosed at a concentration of 0.25% and a rate of 6.0 ml/L.

The second slurry sample, designated Sample D, was also able to be flocculated when dosed with anionic polyacrylamide only (as above), although smaller flocs were formed and these flocs settled more slowly than Sample C above. In this case good clarification could not be achieved (settled turbidity = 382 NTU).

In laboratory trials, 100 ml of each of the above ***flocculated*** slurry samples were filtered on a Buchner funnel using 8 micron filter paper. A 10 ml sample of each filtrate thus obtained was charged to a cuvet and measured for turbidity using a Hanna Instruments HI88703 Turbidity Meter. The results are set out in Table 3 below:

**Table 3**

| **Sample** | **Turbidity of 8 micron filtrate (NTU)** |
|---|---|
| C | 3.46 |
| D | 29.3 |

Sample C exhibited a significantly lower filtrate turbidity than Sample D, which indicated that a lesser quantity of fine particles were present in Sample C than Sample D.

When a coal tailings slurry was dosed with cationic coagulant, some of the discrete anionic particles (e.g. clay colloids) that were present in the slurry agglomerated with each other or with larger solid particles. When the slurry was then subjected to fine filtration, some of these aggregates were retained in the slurry. This caused a net reduction in both the quantity of particles present in the filtrate and their total anionic surface charge.

A net reduction in quantity of suspended particles was able to be measured by a Turbidimeter. Therefore, once an ideal set point for filtrate turbidity of the flocculated slurry was determined, upstream coagulant dosing enabled the turbidity set point to be maintained.

In order to demonstrate this example of the method and system, a series of 100 ml aliquots of ***untreated*** Sample D were first dosed with increasing quantities of coagulant (1% OptiFlox® Coagulant 325 polyDADMAC-polysaccharide copolymer) and then flocculated with anionic polyacrylamide as detailed above. The flocculated slurries were then filtered on a Buchner funnel using 8 micron filter paper as before.

A 10 ml sample of each filtrate thus obtained was charged to a cuvet and measured for turbidity using a Hanna Instruments HI88703 Turbidity Meter. The results are set out in Table 4 below:

**Table 4**

| **Sample D (Pre-Dosed with Coagulant)** | |
|---|---|
| **Coagulant Dose** | **Turbidity of 8 micron filtrate (NTU)** |
| None | 29.3 |
| 0.1 ml | 20.6 |
| 0.2 ml | 16.1 |
| 0.4 ml | 7.10 |
| 0.8 ml | 4.72 |

The data demonstrated that filtrate turbidity decreased as coagulant dosing prior to flocculation increased. This indicated not only a reduction in fine particles remaining in the filtrate, but also corresponded with improved flocculation and clarification of the slurry as a whole.

To apply the above method for the control of flocculation in an actual coal preparation plant thickener, required the following steps:
1. Install a continuous sampling, filtration and measuring device as set out in Figure 2.
   In this case, sampling should occur post-flocculation (i.e. from the thickener feedwell).
2. Monitor filtrate turbidity readings relative to thickener performance in terms of flocculation and clarification efficacy.
3. Determine a filtrate turbidity value or range that prevails when the thickener is performing as desired.
4. Program the controller to maintain the desired turbidity set point or range via output signals to the coagulant dosing pump. In other words, if the filtrate turbidity exceeds the set point or range, then coagulant is dosed upstream to effect a reduction in filtrate turbidity (as per the above experimental example) until the desired turbidity is regained.

Therefore, by pre-determining an ideal filtrate turbidity set point or range for the flocculated slurry (i.e. the value at which optimal flocculation and clarification was deemed to have occurred in the thickener), it was possible to control and maintain thickener performance via simple automatic feedback control of coagulant dosing upstream.

Whilst a number of specific method and system embodiments have been described, it should be appreciated that the method and system may be embodied in many other forms. For example, a colourimeter can be employed in place of the streaming current detector. Also, a wide variety of wastewaters can be treated by the filter/detect/feedback/dose method and system.

In the claims which follow, and in the preceding description, except where the context requires otherwise due to express language or necessary implication, the word "comprise" and variations such as "comprises" or "comprising" are used in an inclusive sense, i.e. to specify the presence of the stated features but not to preclude the presence or addition of further features in various embodiments of the method and system as disclosed herein.

## Claims

1. A method for treating a fluid stream that comprises particles of varying size suspended in the fluid stream, the method comprising:
- obtaining a sample of a main or major flow of the fluid stream, the sample containing the suspended particles of varying size in the fluid stream;
- processing the sample to remove from the sample particles of the suspended particles of the varying size that are above a certain size, to obtain an aliquot that contains suspended particles from the fluid stream that have a maximum particle size of less than 20 micrometres;
- measuring in the aliquot one or more parameters that relate to quantity and/or charge of the suspended particles from the fluid stream that have a size of less than 20 micrometres such that, when the one or more parameters deviate from a desired value, this indicates that the suspended particles of the varying size in the fluid stream require treatment;
- using measurements of the one or more parameters to determine whether the suspended particles of the varying size in the fluid stream require treatment;
- selecting a chemical that is suitable for treating the suspended particles of the varying size in the fluid stream that require treatment; and
- adding the chemical to the fluid stream.

2. A method as defined in claim 1, wherein the chemical is added to the fluid stream at a location upstream of where the sample is obtained.

3. A method as defined in claim 1 or 2, wherein a plurality of parameters are measured.

4. A method as claimed in any one of the preceding claims, wherein the desired value of the parameter(s) comprises a set point or a set range, and the treatment is continued until the measured parameter(s) in the aliquot return(s) to the set point or set range.

5. A method as claimed in any one of the preceding claims, wherein the parameter(s) deviate(s) from the desired value when particles of varying size suspended in the fluid stream are such as to render the stream unsuitable for the treatment regime.

6. A method as claimed in any one of the preceding claims, wherein the sample is continuously obtained and processed, and wherein the parameter(s) in the continuously obtained aliquot is/are continuously measured, with the continuously obtained and processed sample comprising a side stream or bleed stream of the fluid stream.

7. A method as claimed in any one of the preceding claims, wherein the suspended particles of the varying size to be treated and the suspended particles from the fluid stream that have a size of less than 20 micrometres that are measured in the aliquot comprise colloidal and/or sub-colloidal particles.

8. A method as claimed in any one of the preceding claims, wherein one of the parameters is the net surface charge or the conductivity of the suspended particles from the fluid stream that have a size of less than 20 micrometres.

9. A method as claimed in claim 8, wherein the net surface charge of the suspended particles from the fluid stream that have a size of less than 20 micrometres is determined by measuring charge demand using a streaming current detector, optionally accompanied by dosing of a coagulant into the aliquot, or by using a colourimeter, optionally accompanied by dosing of an indicator dye into the aliquot, and wherein conductivity of the particles is measured using a conductivity meter.

10. A method as claimed in any one of the preceding claims, wherein one of the parameters is turbidity, and wherein the turbidity of the aliquot is measured using a turbidity meter.

11. A method as claimed in any one of the preceding claims, wherein processing the sample to remove from the sample particles of the suspended particles of the varying size of less than 20 micrometres to obtain the aliquot comprises one or more of: filtering with a filter such as a cross-flow, optionally self-cleaning filter; and centrifuging or hydrocycloning.

12. A method as claimed in any one of the preceding claims, wherein the chemical is dispensed, such as by automatically dispensing, into the fluid stream, with the chemical optionally being selected to enable coagulation, agglomeration or flocculation of the suspended particles of the varying size in the fluid stream, whereby the particles are removed as part of a treatment regime for the fluid stream.

13. A method as claimed in any one of the preceding claims, wherein, when the suspended particles from the fluid stream that have a size of less than 20 micrometres comprise colloidal and/or sub-colloidal particles, the chemical comprises a coagulant.

14. A method as claimed in any one of the preceding claims, wherein the sample is processed such that the aliquot contains a maximum particle size in a range of about 1 to 20 micrometres.

15. A system for treating a fluid stream that comprises particles of varying size suspended in the fluid stream, the system comprising:
- an apparatus for obtaining a sample of the fluid stream of a main or major flow of fluid stream, such that the sample contains the suspended particles of the varying size present in the fluid stream;
- an apparatus for processing the sample to remove from the sample particles of the suspended particles of the varying size that are above a certain size, to obtain an aliquot that contains suspended particles from the fluid stream that have a size of less than 20 micrometres;
- a meter for measuring in the aliquot one or more parameters that relate to quantity and/or charge of the suspended particles from the fluid stream that have a size less than a certain size, the meter able to measure when the parameter(s) deviate(s) from a desired value to indicate that the suspended particles of the varying size in the fluid stream require treatment;
- a processor for receiving a signal from the meter and dispensing a chemical that is suitable for treating the corresponding particles into the fluid stream;
- a dispensing mechanism for receiving a signal from the processor and for adding the chemical to the fluid stream to enable the corresponding particles to be separated from the stream.

## Patentansprüche

1. Ein Verfahren zum Behandeln eines Fluidstroms, der aufweist Partikel unterschiedlicher Größe, welche in dem Fluidstrom suspendiert sind, das Verfahren aufweisend:
- Beziehen einer Probe eines Haupt- oder großen Flusses des Fluidstroms, wobei die Probe enthält die suspendierten Partikel unterschiedlicher Größe in dem Fluidstroms,
- Prozessieren der Probe, um zu entfernen Partikel der suspendierten Partikel unterschiedlicher Größe, die über einer bestimmten Größe sind, um zu erhalten ein Aliquot, das enthält suspendierte Partikel von dem Fluidstrom, die eine maximale Partikelgröße von weniger als 20 Mikrometer haben;
- Messen in dem Aliquot einen oder mehrere Parameter, die sich beziehen auf Quantität und/oder Ladung der suspendierten Partikel von dem Fluidstrom, die eine Größe von weniger als 20 Mikrometer haben, sodass, wenn der eine oder die mehreren Parameter abweicht bzw. abweichen von einem gewünschten Wert, das bedeutet, dass die suspendierten Partikel unterschiedlicher Größe in dem Fluidstrom eine Behandlung benötigen;
- Nutzen der Messungen des einen oder der mehreren Parameter, um zu bestimmen, ob die suspendierten Partikel unterschiedlicher Größe in dem Fluidstrom eine Behandlung benötigen;
- Wählen einer Chemikalie, die geeignet ist zum Behandeln der suspendierten Partikel unterschiedlicher Größe in dem Fluidstrom, die eine Behandlung benötigen; und
- Hinzufügen der Chemikalie zu dem Fluidstrom.

2. Ein Verfahren wie definiert in Anspruch 1, wobei die Chemikalie hinzugefügt wird zu dem Fluidstrom an einem Ort stromaufwärts von wo die Probe bezogen wird.

3. Ein Verfahren wie definiert in Anspruch 1 oder 2, wobei eine Mehrzahl von Parametern gemessen wird.

4. Ein Verfahren wie beansprucht in irgendeinem der vorangehenden Ansprüche, wobei der gewünschte Wert des oder der Parameter(s), aufweist einen Nennwert oder Nennbereich und die Behandlung fortgesetzt wird, bis der oder die gemessene(n) Parameter in dem Aliquot zu dem Nennwert oder Nennbereich zurückkehrt oder zurückkehren.

5. Ein Verfahren wie beansprucht in irgendeinem der vorangehenden Ansprüche, wobei der oder die Parameter abweicht bzw. abweichen von dem gewünschten Wert, wenn Partikel unterschiedlicher Größe suspendiert in dem Fluidstrom so sind, dass sie den Strom ungeeignet machen für das Behandlungsschema.

6. Ein Verfahren wie beansprucht in irgendeinem der vorangehenden Ansprüche, wobei die Probe kontinuierlich bezogen und prozessiert wird und wobei der oder die Parameter in dem kontinuierlich bezogenen Aliquot kontinuierlich gemessen wird/werden, wobei die kontinuierlich bezogene und prozessierte Probe aufweist einen Seitenstrom oder Ablassstrom des Fluidstrom.

7. Ein Verfahren wie beansprucht in irgendeinem der vorangehenden Ansprüche, wobei die zu behandelnden suspendierten Partikel unterschiedlicher Größe und die in dem Aliquot gemessenen suspendierten Partikel von dem Fluidstrom, die eine Größe von weniger als 20 Mikrometer haben, aufweisen kolloidale und/oder sub-kolloidale Partikel.

8. Ein Verfahren wie beansprucht in irgendeinem der vorangehenden Ansprüche, wobei einer der Parameter ist die Netto-Oberflächenladung oder die Leitfähigkeit der suspendierten Partikel von dem Fluidstrom, die eine Größe von weniger als 20 Mikrometer haben.

9. Ein Verfahren wie beansprucht in Anspruch 8, wobei die Netto-Oberflächenladung der suspendierten Partikel von dem Fluidstrom, die eine Größe von weniger als 20 Mikrometer haben, bestimmt wird mittels Messens einer Ladung Nachfrage mit einem Ladungsmessgerät, optional begleitet von einem Dosieren eines Koagulans in das Aliquot, oder unter Verwendung eines Kolorimeters, optional begleitet von einem Dosieren einer Indikatorfarbe in das Aliquot, und wobei Leitfähigkeit der Partikel gemessen wird mittels eines Leitfähigkeitsmessers.

10. Ein Verfahren wie beansprucht in irgendeinem der vorangehenden Ansprüche, wobei einer der Parameter Trübheit ist und wobei die Trübheit des Aliquots gemessen wird mit einem Turbidimeter.

11. Ein Verfahren wie beansprucht in irgendeinem der vorangehenden Ansprüche, wobei das Prozessieren der Probe, um zu entfernen aus der Probe Partikel der suspendierten Partikel unterschiedlicher Größe von weniger als 20 Mikrometer, um zu erhalten das Aliquot, aufweist eines oder mehrere von: Filtern mit einem Filter wie Cross-Flow, optional selbstreinigender Filter und Zentrifugieren oder Wasserzyklonieren.

12. Ein Verfahren wie beansprucht in irgendeinem der vorangehenden Ansprüche, wobei die Chemikalie dispensiert wird, zum Beispiel mittels automatischen Dispensierens, in den Fluidstrom, wobei die Chemikalie optional gewählt wird um zu ermöglichen Koagulation, Agglomeration oder Flokkulation der suspendierten Partikel unterschiedlicher Größe in dem Fluidstrom, wobei die Partikel entfernt werden als Teil eines Behandlungsschemas für den Fluidstrom.

13. Ein Verfahren wie beansprucht in irgendeinem der vorangehenden Ansprüche, wobei, wenn die suspendierten Partikel von dem Fluidstrom, die eine Größe haben von weniger als 20 Mikrometer, aufweisen kolloidale und/oder sub-kolloidale Partikel, die Chemikalie aufweist ein Koagulans.

14. Ein Verfahren wie beansprucht in irgendeinem der vorangehenden Ansprüche, wobei die Probe prozessiert wird, sodass das Aliquot enthält eine maximale Partikelgröße in einem Bereich von ungefähr 1 bis 20 Mikrometer.

15. Ein System zum Behandeln eines Fluidstroms, der aufweist Partikel unterschiedlicher Größe, welche in dem Fluidstrom suspendiert sind, das System aufweisend:
- einen Apparat zum Beziehen einer Probe eines Haupt- oder großen Flusses des Fluidstroms, sodass die Probe enthält die suspendierten Partikel unterschiedlicher Größe in dem Fluidstroms,
- einen Apparat zum Prozessieren der Probe, um zu entfernen Partikel der suspendierten Partikel unterschiedlicher Größe, die über einer bestimmten Größe sind, um zu erhalten ein Aliquot, das enthält suspendierte Partikel von dem Fluidstrom die eine Größe von weniger als 20 Mikrometer haben;
- einen Messapparat zum Messen in dem Aliquot einen oder mehrere Parameter, die sich beziehen auf Quantität und/oder Ladung der suspendierten Partikel von dem Fluidstrom die eine Größe von weniger als eine bestimmte Größe haben, wobei der Messapparat geeignet ist zu messen, wenn der oder die Parameter abweicht bzw. abweichen von einem gewünschten Wert, um anzuzeigen, dass die suspendierten Partikel unterschiedlicher Größe in dem Fluidstrom eine Behandlung benötigen;
- eine Verarbeitungseinheit zum Empfangen eines Signals von dem Messapparat und zum Dispensieren einer Chemikalie, die geeignet ist zum Behandeln der korrespondierenden Partikel, in den Fluidstrom hinein;
- einen Dispensiermechanismus zum Empfangen eines Signals von der Verarbeitungseinheit und zum Hinzufügen der Chemikalie zu dem Fluidstrom, um zu ermöglichen, dass die korrespondierenden Partikel getrennt werden von dem Strom.

## Revendications

1. Procédé pour traiter un flux de fluide comprenant des particules de tailles variables en suspension dans le flux de fluide, le procédé comprenant les étapes consistant à :
- obtenir un échantillon d'un écoulement principal ou majeur du flux de fluide, l'échantillon contenant les particules en suspension de tailles variables dans le flux de fluide ;
- traiter l'échantillon pour éliminer de l'échantillon les particules parmi les particules en suspension de tailles variables qui sont au-delà d'une certaine taille, de manière à obtenir une aliquote qui contient des particules en suspension provenant du flux de fluide qui ont une taille de particule maximale inférieure à 20 micromètres ;
- mesurer dans l'aliquote un ou plusieurs paramètres qui concernent la quantité et/ou la charge des particules en suspension du flux de fluide ayant une taille inférieure à 20 micromètres de telle sorte que, lorsque le ou les paramètres s'écartent d'une valeur souhaitée, cela indique que les particules en suspension de tailles variables dans le flux de fluide nécessitent un traitement ;
- utiliser les mesures du ou des paramètres pour déterminer si les particules en suspension de tailles variables dans le flux de fluide nécessitent un traitement ;
- sélectionner un produit chimique qui est adapté pour traiter les particules en suspension de tailles variables dans le flux de fluide qui nécessitent un traitement ; et
- ajouter le produit chimique au flux de fluide.

2. Procédé selon la revendication 1, dans lequel le produit chimique est ajouté au flux de fluide à un emplacement en amont de l'endroit où l'échantillon est obtenu.

3. Procédé selon la revendication 1 ou 2, dans lequel une pluralité de paramètres sont mesurés.

4. Procédé selon l'une quelconque des revendications précédentes, dans lequel la valeur souhaitée du ou des paramètres comprend un point de consigne ou une plage de consigne, et le traitement est poursuivi jusqu'à ce que le ou les paramètres dans l'aliquote reviennnent au point de consigne ou à la plage de consigne.

5. Procédé selon l'une quelconque des revendications précédentes, dans lequel le ou les paramètres s'écartent de la valeur souhaitée lorsque les particules de tailles variables en suspension dans le flux de fluide sont telles qu'elles rendent le flux inadapté au régime de traitement.

6. Procédé selon l'une quelconque des revendications précédentes, dans lequel l'échantillon est obtenu et traité en continu, et dans lequel le ou les paramètres dans l'aliquote obtenue en continu sont mesurés en continu, avec l'échantillon obtenu et traité en continu comprenant un flux latéral ou un flux de purge du flux de fluide.

7. Procédé selon l'une quelconque des revendications précédentes, dans lequel les particules en suspension de tailles variables à traiter et les particules en suspension du flux de fluide ayant une taille inférieure à 20 micromètres qui sont mesurées dans l'aliquote comprennent des particules colloïdales et/ou sous-colloïdales.

8. Procédé selon l'une quelconque des revendications précédentes, dans lequel un des paramètres est la charge de surface nette ou la conductivité des particules en suspension du flux de fluide ayant une taille inférieure à 20 micromètres.

9. Procédé selon la revendication 8, dans lequel la charge de surface nette des particules en suspension du flux de fluide ayant une taille inférieure à 20 micromètres est déterminée en mesurant la demande de charge à l'aide d'un détecteur de courant d'écoulement, facultativement accompagnée du dosage d'un coagulant dans l'aliquote, ou à l'aide d'un colorimètre, facultativement accompagné du dosage d'un colorant indicateur dans l'aliquote, et dans lequel la conductivité des particules est mesurée à l'aide d'un conductimètre.

10. Procédé selon l'une quelconque des revendications précédentes, dans lequel un des paramètres est la turbidité, et dans lequel la turbidité de l'aliquote est mesurée à l' aide d'un turbidimètre.

11. Procédé selon l'une quelconque des revendications précédentes, dans lequel le traitement de l'échantillon pour éliminer de l'échantillon les particules des particules en suspension de tailles variables inférieures à 20 micromètres pour obtenir l'aliquote comprend une ou plusieurs des étapes parmi : filtrer avec un filtre tel qu'un écoulement transversal, facultativement un filtre autonettoyant ; et centrifuger ou réaliser un hydrocyclonage.

12. Procédé selon l'une quelconque des revendications précédentes, dans lequel le produit chimique est distribué, comme en distribuant automatiquement, dans le flux de fluide, avec le produit chimique facultativement choisi pour permettre la coagulation, l'agglomération ou la floculation des particules en suspension de tailles variables dans le flux de fluide, au moyen duquel les particules sont éliminées dans le cadre d'un régime de traitement pour le flux de fluide.

13. Procédé selon l'une quelconque des revendications précédentes, dans lequel, lorsque les particules en suspension du flux de fluide ayant une taille inférieure à 20 micromètres comprennent des particules colloïdales et/ou sous-colloïdales, le produit chimique comprend un coagulant.

14. Procédé selon l'une quelconque des revendications précédentes, dans lequel l'échantillon est traité de telle sorte que l'aliquote contient une taille de particules maximale se situant dans une plage allant d'environ 1 à 20 micromètres.

15. Système pour traiter un flux de fluide qui comprend des particules de tailles variables en suspension dans le flux de fluide, le système comprenant :
- un appareil pour obtenir un échantillon du flux de fluide d'un écoulement principal ou majeur du flux de fluide, de telle sorte que l'échantillon contient les particules en suspension de tailles variables présentes dans le flux de fluide ;
- un appareil pour traiter l'échantillon pour éliminer de l'échantillon des particules parmi les particules en suspension de tailles variables qui sont au-delà d'une certaine taille, pour obtenir une aliquote qui contient des particules en suspension du flux de fluide ayant une taille inférieure à 20 micromètres ;
- un compteur pour mesurer dans l'aliquote un ou plusieurs paramètres qui concernent la quantité et/ou la charge des particules en suspension du flux de fluide ayant une taille inférieure à une certaine taille, le compteur étant capable de mesurer lorsque le ou les paramètres s'écartent d'une valeur souhaitée pour indiquer que les particules en suspension de tailles variables dans le flux de fluide nécessitent un traitement ;
- un processeur pour recevoir un signal du compteur et distribuer un produit chimique qui est apte à traiter les particules correspondantes dans le flux de fluide ;
- un mécanisme de distribution pour recevoir un signal du processeur et pour ajouter le produit chimique au flux de fluide pour permettre aux particules correspondantes d'être séparées du flux.
